# EUROPEAN PATENT APPLICATION

(11) **EP 1 501 028 A1**
(43) Date of publication of application: **26.01.2005**
(21) Application number: 02722900.4
(22) Date of filing: 30.04.2002
(51) Int. Cl.: G06F 17/60, B65G 63/00, G08G 1/00

(54) **TRANSPORT MANAGING DEVICE**

(71) Applicant: NIPPON STEEL CORPORATION, Tokyo 100-8071 (JP)
(72) Inventor: YAJI, Yasuhito, c/o NIPPON STEEL CORPORATION, Futtsu-shi, Chiba 293-0011 (JP); KOBAYASHI, Hirokazu, c/o NIPPON STEEL CORPORATION, Futtsu-shi, Chiba 293-0011 (JP); SAITOH, Genji, c/o NIPPON STEEL CORPORATION, Tokyo 100-8071 (JP); OKAMOTO, Tetsuya, c/o NIPPON STEEL CORPORATION, Tokyo 100-8071 (JP)
(74) Representative: VOSSIUS & PARTNER
(86) International application number: PCT/JP2002/004319
(87) International publication number: WO 2003/094065

(57) **Abstract**

A determining unit (110) determines information on allocation of a transported raw material or fuel to a production department (170(X)) (unloading area allocation information including calling ports, alongside berths, brands to be unloaded, unloading quantity, and unloading order, and so on) using management information (information on transport management of the raw material or fuel provided from the outside) in a storage unit (115). The storage unit (115) stores the information on the allocation of the raw material or fuel in such a manner that this information can be referred to from the outside. As described above, by determining an unloading area allocation plan which minimizes the number of ports and the transport cost under constraint conditions of at least a berth capacity and a yard stock capacity and allowing the information and the updated information to be shared, accurate, efficient, and economical transport management can be realized.

## Description

### Technical Field

The present invention relates to a transport management device, a transport management system, a transport management method, and a storage medium which computer-readably stores processing steps to execute the same, which are used in a device or a system for performing transport management of a raw material or fuel such as iron ore, coal, any other mineral resource, grain, or fertilizer (hereinafter generically called "raw material or fuel"), for example, by communication via a communication network.

### Background Art

Hitherto, an unscheduled large-sized ship has been frequently utilized for transporting a raw material or fuel in order to reduce a transport cost per unit of the raw material or fuel.

However, for example, there are only 500 to 600 150,000-ton class large-sized ships in the world, and besides the schedule of the large-sized ships is very unstable under the influence of weather, congestion of ships in a port, the schedule of a previous sailing, or the like.

Accordingly, the need for optimizing schedule management (transport management) in a seller of the raw material or fuel, a buyer, and a shipping company is increasing year after year.

Hence, for example, in Japanese Patent Application No. 2000-110232 and so on, a transport management method for performing transport management of a raw material or fuel via a communication network is proposed.

However, the conventional transport management method described in Japanese Patent Application No. 2000-110232 is a method for making a ship allocation plan and managing the progress of transport and so on using transport current situation information (information on the progress of transport, and the like) generated from the ship allocation plan, and it is not a method which can manage the manner in which the raw material or fuel loaded into a ship is optimally allocated to respective production departments, and the like on the buyer side.

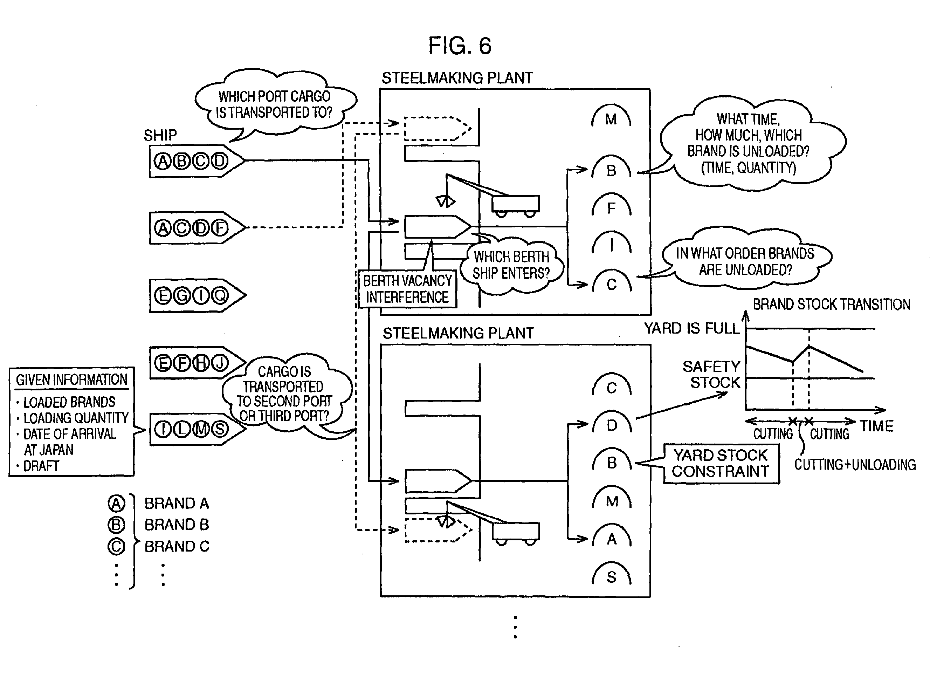

More specifically, in the conventional transport management method, for example, when the buyer is a steelmaker, as shown in Fig. 6, this steelmaker does not cover management regarding the allocation of the raw material or fuel in an unloading area (production department such as a steelmaking plant) (hereinafter also called "unloading area allocation management") including a port at which the ship loaded with the raw material or fuel calls on the way to its final destination after arriving at Japan (port of a steelmaking plant (production department) where the raw material or fuel is unloaded, hereinafter called the "calling port"), a berth which the ship comes alongside in the calling port (hereinafter called the "alongside berth"), a brand of the raw material or fuel to be unloaded from the ship in the calling port (hereinafter called the "brand to be unloaded"), the quantity of the raw material or fuel to be unloaded from the ship in the calling port (hereinafter called the "unloading quantity"), the order of brands of the raw material or fuel to be unloaded from the ship and the order of yards to be used (yards to temporarily store the raw material or fuel) in the calling port (hereinafter called the "unloading order"), and so on.

Accordingly, the unloading area allocation management including the calling port, alongside berth, brand to be unloaded, unloading quantity, unloading order, and so on is not management via the communication network, but it is carried out by an experienced expert's manual labor based on past results. This is inefficient, and because of manual labor, often causes mistakes and is not accurate.

Moreover, conventionally, it is not taken into consideration to minimize the number of calling ports and the transport cost when the aforementioned unloading area allocation management is performed, whereby an economical unloading area allocation plan cannot necessarily be formed.

More specifically, for example, when some ship stands by at a calling port until a yard becomes vacant because the yard is full, the cost thereof (yard demurrage) is a hundred thousand yen per hour. Moreover, when the ship stands by until a berth becomes vacant because the berth is full, the cost thereof (berth demurrage) is a hundred thousand yen per hour. Further, the cost required for one port call is fifteen million yen per port.

Accordingly, to reduce the overall transport cost, it is necessary to make the unloading area allocation plan without waiting for vacant yard and berth and with consideration given to a reduction in the number of calling ports to a minimum, but conventionally, the unloading area allocation plan is made without considering this, whereby in some cases, an enormous cost is required.

Hence, the present invention is made to eliminate the aforementioned drawbacks, and its object is to provide a transport management device, a transport management system, a transport management method, and a storage medium which computer-readably stores processing steps to execute the same, which can realize accurate, efficient, and economical transport management by determining an unloading area allocation plan that minimizes the number of calling ports and the transport cost under constraint conditions of at least a berth capacity and a yard stock capacity and allowing this information and the updated information to be shared.

### Summary of the Invention

Under the aforementioned object, a first invention is a transport management device, which is allowed to communicate with an outside via a network, characterized by comprising a storage unit storing and managing information on transport management of a raw material or fuel provided from an outside via the network and information on allocation of the transported raw material or fuel in such a manner that these information are allowed to be referred to from the outside via the network.

A second invention is characterized by further comprising a presenting unit presenting the information managed in the storage unit to the outside via the network in the first invention.

A third invention is characterized in that in the second invention, the presenting unit presents a result of updating corresponding information in the storage unit based on a change instruction from an information provider side via the network to the outside via the network.

A fourth invention is characterized in that in the second invention, the presenting unit presents corresponding information in the storage unit based on an information request from the outside via the network to a requester of the information via the network.

A fifth invention is characterized in that in the first invention, the information on the transport management of the raw material or fuel in the storage unit includes at least any information of transport facility information provided from a management side of a transport facility, transport current situation information provided from the management side, raw material or fuel brand information provided from a buyer side or a seller side of the raw material or fuel, and transport instruction information provided from the buyer side or the seller side of the raw material or fuel, and the information on the allocation of the raw material or fuel in the storage unit includes information on at least any of calling ports, alongside.berths, brands to be unloaded, unloading quantity, and unloading order when the transport facility is a ship.

A sixth invention is characterized by further comprising a determining unit determining the information on the allocation of the raw material or fuel based on at least the information on the transport management of the raw material or fuel in the first invention.

A seventh invention is characterized in that in the six invention, the information on the allocation of the raw material or fuel includes information on at least any of calling ports, alongside berths, brands to be unloaded, unloading quantity, and unloading order when a transport facility is a ship, and the determining unit determines the information on the allocation of the raw material or fuel based on information on berths and yards of a port of a production department provided from the production department of the buyer of the raw material or fuel.

An eighth invention is characterized in that in the seventh invention, the determining unit determines the information on the allocation of the raw material or fuel based on a solution which minimizes the number of calling ports and a transport cost under constraint conditions of at least a berth capacity and a yard stock capacity.

A ninth invention is a transport management system in which a buyer side of a raw material or fuel, a production department of the buyer side, a seller side, a management side of a transport facility of the raw material or fuel, and a transport management side are connected so as to be allowed to communicate at least on a same network, characterized in that the transport management side comprises a function which stores and manages information on transport management of the raw material or fuel provided from an outside via the network and information on allocation of the transported raw material or fuel in such a manner that these information are allowed to be referred to from the outside via the network.

A tenth invention is a transport management system in which a buyer side of a raw material or fuel, a production department of the buyer side, a seller side, and a management side of a transport facility of the raw material or fuel are connected so as to be allowed to communicate at least on a same network, characterized by comprising a storage unit storing information on transport management of the raw material or fuel and information on allocation of the transported raw material or fuel in such a manner that these information are allowed to be referred to from an outside via the network.

An eleventh invention is a transport management method for performing transport management of a raw material or fuel via a network, characterized by comprising: a first managing step of managing information on the transport management inputted from at least any of a buyer side of the raw material or fuel, a seller side, and a management side of a transport facility on the network; a determining step of determining information on allocation of the raw material or fuel using the transport management information managed in the first managing step; a second managing step of managing the information determined in the determining step; and a providing step of providing the management information in the first and second managing steps to at least any of the buyer side, a production department of the buyer side, the seller side, and the management side of the transport facility in such a manner that the information is allowed to be referred to via the network.

A twelfth invention is characterized by comprising an updating step of updating the management information in the first and second managing steps based on information on change inputted by at least any of the buyer side, the production department of the buyer side, the seller side, and the management side of the transport facility, and characterized in that the providing step comprises a step of providing the management information updated in the updating step, in the eleventh invention.

A thirteenth invention is characterized in that in the eleventh invention, the information on the allocation of the raw material or fuel includes information on at least any of calling ports, alongside berths, brands to be unloaded, unloading quantity, and unloading order when the transport facility is a'ship, and the determining step comprises a step of determining the information on the allocation of the raw material or fuel based on a solution which minimizes the number of calling ports and a transport cost under constraint conditions of at least a berth capacity and a yard stock capacity.

A fourteenth invention is a computer-readable storage medium on which a program to make a computer function as a predetermined unit is recorded, characterized in that the predetermined unit comprises a storage unit storing and managing information on transport management of a raw material or fuel provided from an outside via a network and information on allocation of the transported raw material or fuel in such a manner that these information are allowed to be referred to from the outside via the network.

More specifically, for example, by a configuration in which at least any of a buyer of a raw material or fuel (steelmaker or the like), a seller, a shipping company, and a production department of the buyer (steelmaking plant or the like which uses the raw material or fuel when the buyer is the steelmaker) can share up-to-date transport facility information, raw material or fuel brand information, transport instruction information, and information on allocation of the raw material or fuel on the buyer side (unloading area allocation information), necessary information can be obtained in real time, timely, and accurately, an efficient transport plan can be drawn up, and particularly the unloading area allocation information can be shared, whereby unloading area allocation management jobs which only skilled experts have hitherto been able to do can be performed quickly, exactly, and efficiently.

Furthermore, if a solution which minimizes the number of calling ports, the transport cost, and so on while stable stock is secured under constraint conditions of at least a berth capacity and a yard stock capacity is found when the unloading area allocation information (information on calling ports, alongside berths, brands to be unloaded, unloading quantity, unloading order, and so on) is determined, the economical unloading area allocation management jobs which have not been able to be realized even by the skilled expert can be easily realized.

Incidentally, the "transport facility information" is information including information on specifications of the transport facility, and more specifically, for example, information on the dimension, allowable load capacity, and so on of each transport facility. Moreover, the "transport facility information" preferably includes vacancy information on the transport facility, and more preferably may include partial vacancy information of the transport facility.

The "raw material or fuel brand information" is information including information on raw material or fuel (cargo) to be transported, and more specifically, for example, information on the name, grade, transport quantity, and so on of the raw material or fuel. This raw material or fuel brand information is provided from the seller side or the buyer side.

The "transport current situation information" is information including information on the progress of transport, and more specifically, for example, information on a present location, schedule information, and so on of the transport facility.

The "transport instruction information" is information including information on a transport method, and more specifically, for example, information on a loading port, and an unloading port, and a loading procedure.

The "calling port" means a port at which the ship calls on the way from a loading are to a final unloading area of the raw material or fuel (port of the production department, and the like), and the "alongside berth" means a berth which the ship comes alongside in the calling port.

The "brand to be unloaded" means a brand of the raw material or fuel unloaded in the calling port, the "unloading quantity" means the quantity of the raw material or fuel to be unloaded in the calling port, and the "unloading order" means the order of brands to be unloaded and the order of yards to be used.

The "berth capacity" means the number and type of transport facilities able to come alongside the berth at a time.

The "yard stock capacity" means the allowable capacity of the yard which temporarily stores the raw material or fuel.

### Brief Description of the Drawings

Fig. 1 is a block diagram showing the configuration of a transport management system to which the present invention is applied;
Fig. 2 is a block diagram showing the configuration of a transport management function of the transport management system;
Fig. 3 is a block diagram showing the configuration of a computer function included in each of a buyer, a seller, a shipping company, an inspection agency, and a production department of the buyer of the transport management system;
Fig. 4 is a flowchart for explaining the operation of a main function of the transport management system;
Fig. 5 is a flowchart for explaining the operation of the entire transport management system; and
Fig. 6 is a diagram for explaining a conventional unloading area allocation management method.

### Detailed Description of the Preferred Embodiments

An embodiment of the present invention will be described below with reference to the drawings.

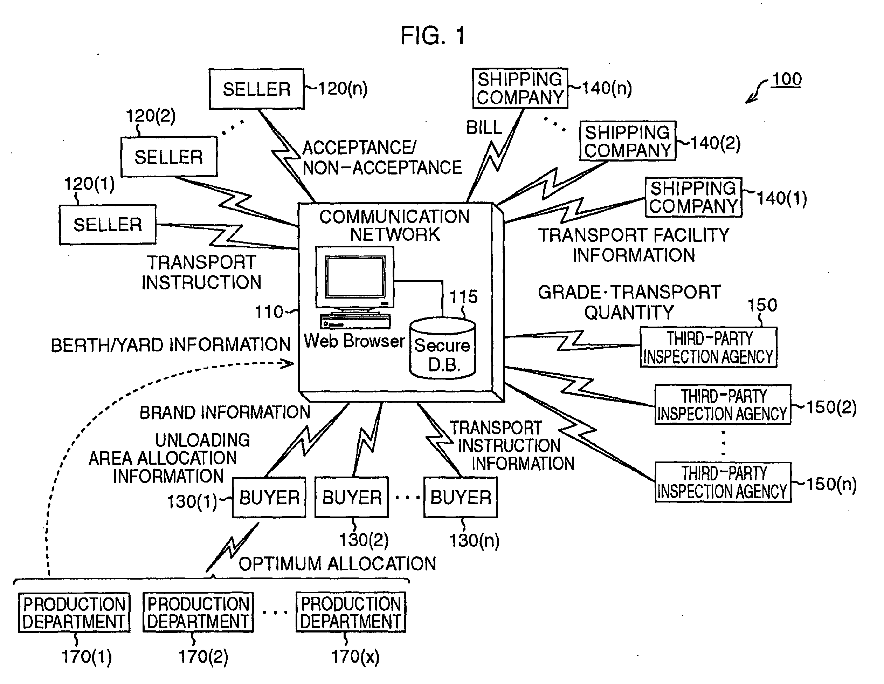

The present invention is applied, for example, to a transport management system 100 such as shown in Fig. 1.

### <Overall Configuration of Transport Management System 100>

As shown in Fig. 1, the transport management system 100 includes a transport management function 110 to efficiently transport raw material or fuel such as iron ore, coal, any other mineral resource, grain, or fertilizer (raw material or fuel) by ship and manage information for optimized allocation of the raw material or fuel in an unloading area of the raw material or fuel.

This transport management function 110 is configured to be accessible from plural sellers 120(1), 120(2), ..., 120(n), plural buyers 130(1), 130(2), ..., 130(n), plural shipping companies 140(1), 140(2), ..., 140(n), and plural inspection agencies 150(1), 150(2), ..., 150 (n) via a communication network.

Plural production departments 170(1), 170(2), ..., 170(n) are connected to each of the buyers 130(1), 130(2), ..., 130 (n) via the communication network so as to be accessible to each other.

For example, when the buyer 130(X) is a steelmaker, the plural production departments 170(1), 170(2), ..., 170 (n) respectively correspond to "steelmaking plants" (unloading areas) of the buyer 130(X). Accordingly, the raw material or fuel purchased by the buyer 130(X) and transported by ship is allocated in predetermined quantities by the ship calling at ports of the respective steelmaking plants (production departments 170 (1) , 170(2), ..., 170 (n)).

Incidentally, to simplify the explanation, Fig 1 shows the configuration in which the plural production departments 170(1), 170(2), ..., 170(n) are connected only to one buyer 130(1), but in actuality, the plural production departments 170(1), 170(2), ..., 170(n) are also connected to each of the other buyers 130 (2) , ..., 130(n).

Moreover, each of the plural production departments 170(1), 170(2), ..., 170(n) is accessibly connected to the transport management function 110 via the communication network via the buyer 130(X) or directly.

The transport management system 100 is configured to collectively manage information held by each of the buyers 130(1), 130(2), ..., 130(n), the sellers 120(1), 120(2), ..., 120(n), the shipping companies 140(1), 140(2), ..., 140(n), and the inspection agencies 150(1), 150(2), ..., 150(n) (transport management information), information held by each of the plural production departments 170(1), 170(2), ..., 170(n) of the buyers 130(1), 130(2), ..., 130(n) (berth/yard information), and so on in the transport management function 110, so that by accessing the transport management function 110 via the communication network, each of the buyers 130(1), 130(2), ..., 130(n), the sellers 120(1), 120(2), ..., 120(n), the shipping companies 140(1), 140(2), ..., 140(n), the inspection agencies 150(1), 150(2), ..., 150(n), and the production departments 170(1), 170(2), ..., 170(n) of the buyers 130(1), 130(2), ..., 130(n) can refer to the management information in the transport management function 110.

Namely, the transport management system 100 is configured to provide a neutral and safe place to share information which is independent of the seller 120(X), the buyer 130(X), the shipping company 140(X), and the production department 170(X) by the transport management function 110 including a database 115 to store and manage the transport management information, the berth/yard information, and so on, so that by easily accessing the transport management function 110 via the communication network such as the internet, the management information in the transport management function 110 can be referred to and updated.

Moreover, in this embodiment, especially by the access of the buyer 130(X) to the transport management function 110 via the communication network, information on unloading area allocation management (hereinafter called "unloading area allocation information) including a port at which the ship loaded with the raw material or fuel calls on the way to its final destination (calling port), a berth which the ship comes alongside in the calling port (alongside berth), a brand to be unloaded from the ship in the calling port (brand to be unloaded), the quantity of the raw material or fuel to be unloaded from the ship in the calling port (unloading quantity), the order of brands of the raw material or fuel to be unloaded from the ship and the order of yards to be used in the calling port (unloading order), and so on is determined using the management information in the database 115. This unloading area allocation information is collectively managed in the database 115.

Accordingly, each of the buyers 130(1), 130(2), ..., 130(n), the sellers 120(1), 120(2), ..., 120(n), the shipping companies 140(1), 140(2), ..., 140(n), and the inspection agencies 150(1), 150(2), ..., 150 (n) can refer to the unloading area allocation information managed in the database 115 of the transport management function 110 by accessing the transport management function 110 via the communication network.

Further, the buyer 130(X) transmits the unloading area allocation information determined by the transport management function 110 to the production departments 170(1), 170(2), ..., 170(n) of the buyer 130(X).

As described above, in this embodiment, the management information (transport management information, berth/yard information, unloading area allocation information, and so on) managed by the transport management function 110 can be shared by the buyers 130(1), 130(2), ..., 130(n), the sellers 120(1), 120(2), ..., 120(n), the shipping companies 140(1), 140(2), ..., 140(n), the inspection agencies 150 (1) , 150(2), ..., 150 (n), and the production departments 170(1), 170(2), ..., 170(n) of the buyers 130(1), 130(2), ..., 130(n).

Incidentally, as concerns a charter contract with the shipping company 140(X), for example, the buyer charters the ship under an FOB (Free On Board) contract, and the seller charters the ship under a C&F (Cost & Freight) contract, but in this embodiment, to simplify the explanation, it is assumed that the buyer 130(X) executes a charter contract with the shipping company 140(X) under an FOB contract. When the seller 120(X) executes a charter contract (C&F contract), the positions of the buyer 130(X) and the seller 120(X) are reversed only, and the basic configuration in this embodiment is unchanged.

Further, in this embodiment, the buyer 130(X) provides the unloading area allocation information to the production departments 170(1), 170(2), ..., 170(n), but without being limited to this configuration, for example, the production departments 170(1), 170(2), ..., 170(n) may acquire the unloading area allocation information by directly accessing the transport management function 110.

### <Configuration of Transport Management Function 110>

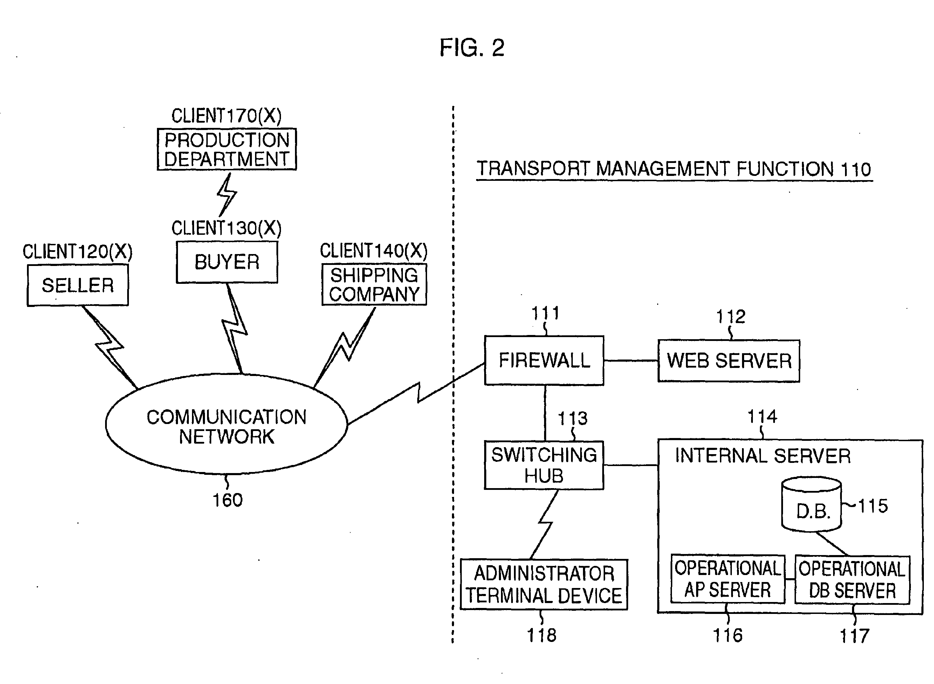

The transport management function 110 is provided in any agency (independent business organization or the like), and for example, as shown in Fig. 2, it includes a firewall 111, an Web server 112, a switching hub 113, an internal server 114, and a terminal device for an administrator of this system (system administrator terminal device) 118.

The Web server 112 is accessed by the sellers 120(1), 120(2), ..., 120(n), the buyers 130(1), 130(2), ..., 130(n), the shipping companies 140(1), 140(2), ..., 140(n), and the inspection agencies 150(1), 150(2), ..., 150(n) via the communication network 160 such as the Internet and the firewall 111.

By this Web server 112, a series of services including registration, updating, and display of the transport management information (transport facility information, raw material or fuel brand information, transport instruction information, and so on), the berth/yard information, and the unloading area allocation information (information on the calling port, alongside berth, brand to be unloaded, unloading quantity, unloading order, and so on) is provided to each of the sellers 120(1), 120(2), ..., 120(n), the buyers 130(1), 130(2), ..., 130(n), the shipping companies 140(1), 140(2), ..., 140(n), and the inspection agencies 150(1), 150(2), ..., 150(n).

The internal server 114 includes a database 115 which stores various kinds of information such as the transport management information, the berth/yard information, and the unloading area allocation information, an operational DB server 117 which performs the operation of the database 115, and an operational AP server 116 which controls the operation of the entire system 110 by executing an application to which the present invention is applied.

The database 115 mainly stores and manages the following information □ to □ as the transport management information, the berth/yard information, and the unloading area allocation information, which each of the sellers 120(1), 120(2), ..., 120(n), the buyers 130(1), 130(2), ..., 130(n), the shipping companies 140(1), 140(2), ..., 140(n), the inspection agencies 150(1), 150(2), ..., 150(n), and the production departments 170(1), 170(2), ..., 170(n) of the buyers 130(1), 130(2), ..., 130(n) can refer to.

### ① Information provided by the buyer 130(X) which charters the ship

· Information on a loading port, unloading ports, and a loading method of the ship chartered by the buyer itself (transport instruction information). This transport instruction information may further include schedule information on what time and which port the ship departs from, what time and which port the ship arrives at, and so on, information on the designation of a loading space (hold), into which space and which raw material or fuel is loaded, at which port and from which space the raw material or fuel is unloaded, and the like.
· Information on the area of production, the grade, the weight, and the like of the raw material or fuel loaded into the ship (brand information).

### ② Information provided by the seller 120(X)

· Information on acceptance/non-acceptance of transport by the ship chartered by the buyer 130(X) (acceptance information).
· Information on a bill to the buyer 130(X).

### ③ Information provided by the shipping company 140(X)

· Information on the ship under the charter contract with the buyer 130(X) (transport facility information).
   More specifically, for example, the name of the ship, dimension of the ship (Dimension), loading capacity, heights from the bottom of the ship and the surface of water, age of the ship, real-time vacancy information on a ship-by-ship basis, vacancy information on the loading space of the ship (vacant space information), and so on.
· Information on the location (present location), the progress of the schedule, and the like of the ship under the charter contract with the buyer 130(X) (current situation information).
· Information on a bill to the buyer 130(X). This information on the bill is information generated from the transport facility information, the brand information, the transport instruction information, and quality information and transport quantity information which will be described later, and it is used for settlement of accounts.

### ④ Information provided by the inspection agency 150(X)

Here, in general, as concerns the transport cost of raw material or fuel, the final transport cost is determined by the result of a third party's analysis of the raw material or fuel and measurement of the grade thereof at the time of loading or unloading of the raw material or fuel, and hence as an agency to execute the above, the third-party inspection agency 150(X) is provided.

Accordingly, the information provided by the inspection agency 150(X) is information on the result of analysis of ingredients of the raw material or fuel and rank indicating the degree of quality (quality information) and information on the transport weight information and so on (transport quantity information).

### ⑤ Information provided by the production department 170(X)

Information on berths and yards of a port on the production department 170(X) side (berth/yard information).

### ⑥ Information determined by the buyer 130(X) performing an optimum allocation calculation through the transport management function 110

Information on the calling port, alongside berth, brand to be unloaded, unloading quantity, unloading order, and so on (unloading area allocation information) which is determined by performing the optimum allocation calculation of the raw material or fuel with respect to the production departments 170 (1) , 170 (2) , ..., 170 (n) (steel making plants or the like if the buyer 130(X) is a steel corporation) which use the raw material or fuel using the information shown in ① to ⑤ by the buyer 130(X) accessing the transport management function 110.

Incidentally, this embodiment is configured, as an example thereof, so that by making the transport management function 110 (more specifically, the operational AP server 116) have functions of optimum allocation calculation and determination of the unloading area allocation information and by the buyer 130(X) accessing the transport management function 110, the optimum allocation calculation and the determination of the unloading area allocation information are performed, but without being limited to this configuration, for example, it is also possible that the functions possessed by the transport management function 110 (operational AP server 116) are directly provided in the buyer 130(X), and that the optimum allocation calculation and the determination of the unloading area allocation information are internally processed on the buyer 130(X) side.

In the database 115 to which the aforementioned information ① to ④ (transport management information), information ⑤ (berth/yard information), and information ⑥ (unloading area allocation information) are provided, these transport management information, berth/yard information, and unloading area allocation information are always stored in an up-to-date state by the operational DB server 117 and the operational AP server 116.

Moreover, in the case of any change in the information in the database 115, any of the sellers 120(1), 120(2), ..., 120(n), the buyers 130(1), 130(2), ..., 130(n), the shipping companies 140(1), 140(2), ..., 140(n), and the production departments 170(1), 170(2), ..., 170(n) of the buyers 130(1), 130(2), ..., 130(n) inputs information on the change (updated information), and this information on the change is stored in the database 115 by the operational DB server 117 and the operational AP server 116.

Accordingly, each of the sellers 120(1), 120(2), ..., 120 (n) , the buyers 130(1), 130(2), ..., 130(n), the shipping companies 140(1), 140(2), ..., 140(n), and the production departments 170(1), 170(2), ..., 170(n) of the buyers 130(1), 130(2), ..., 130(n) can always refer to the up-to-date transport management information, berth/yard information, and unloading area allocation information, and in addition, updated information thereof without crossing of the information.

The system administrator terminal device 118 is composed a personal computer including a CPU and a memory or the like and connectable to each of the Web server 112 and the internal server 114 via the switching hub 113.

### <Configurations of Seller 120(X), Buyer 130(X), Shipping Company 140(X), and Inspection Agency 150(X)>

Each of the seller 120(X), the buyer 130(X), the shipping company 140(X), the inspection agency 150(X), and the production department 170(X) has a terminal device such as a personal computer including a CPU and a memory or the like, and it is accessible to the transport management function 110 via the communication network 160 by manipulating the terminal device.

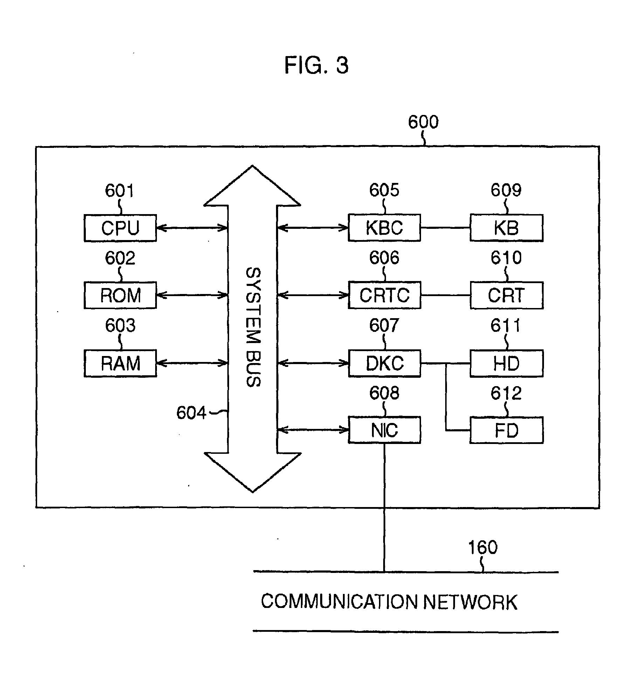

For example, the aforementioned terminal device has a computer function 600 such as shown in Fig. 3, and the operation in this embodiment is executed by a CPU 601 of this computer function 600.

As shown in Fig. 3, the computer function 600 has a configuration in which the CPU 601, a ROM 602, a RAM 603, a keyboard controller (KBC) 605 of a keyboard (KB) 609, a CRT controller (CRTC) 606 of a CRT display (CRT) 610 as a display unit, a disk controller (DKC) 607 of a hard disk (HD) 611 and a floppy disk (FD) 612, and a network interface card (NIC) 608 can communicate with each other via a system bus 604.

The system bus 604 is connected to the communication network 160 shown in Fig. 1 and Fig. 2.

The CPU 601 collectively controls the respective components connected to the system bus 604 by executing software stored in the ROM 602 or the HD 611 or software supplied from the FD 612.

Namely, the CPU 601 performs control to realize the operation in this embodiment by reading and executing a processing program according to a predetermined processing sequence from the ROM 602, the HD 611, or the FD 612.

The RAM 603 functions as a main memory or a work area or the like of the CPU 601.

The KBC 605 controls an instruction input from the KB 609 or a pointing device or the like not shown.

The CRTC 606 controls the display of the CRT 601.

The DKC 607 controls access to the HD 611 and the FD 611 which store a boot program, various kinds of applications, an edit file, a user file, a network management program, the aforementioned predetermined processing programs, and so on.

The NIC 608 exchanges data bidirectionally with equipment or systems on the communication network 160.

### <Operation of Transport Management System 100>

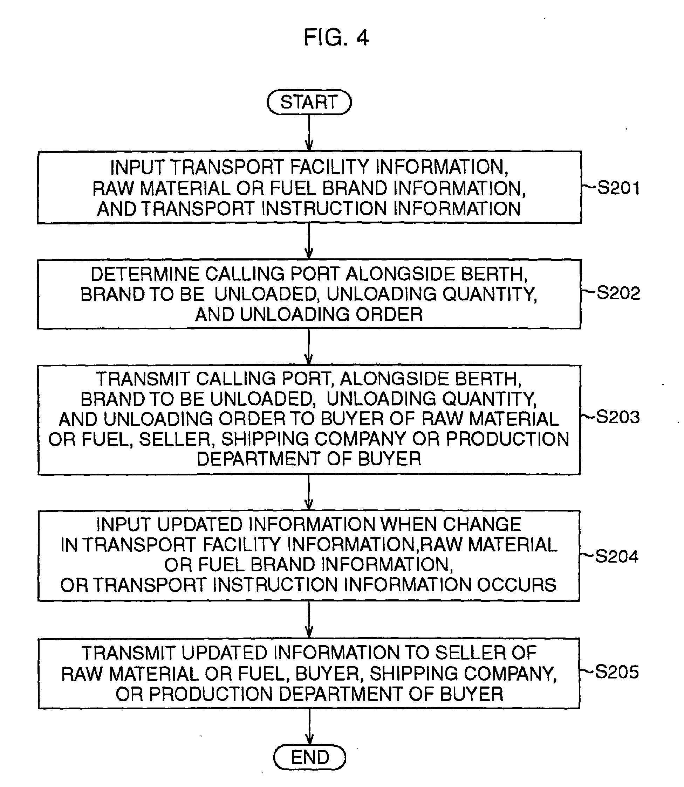

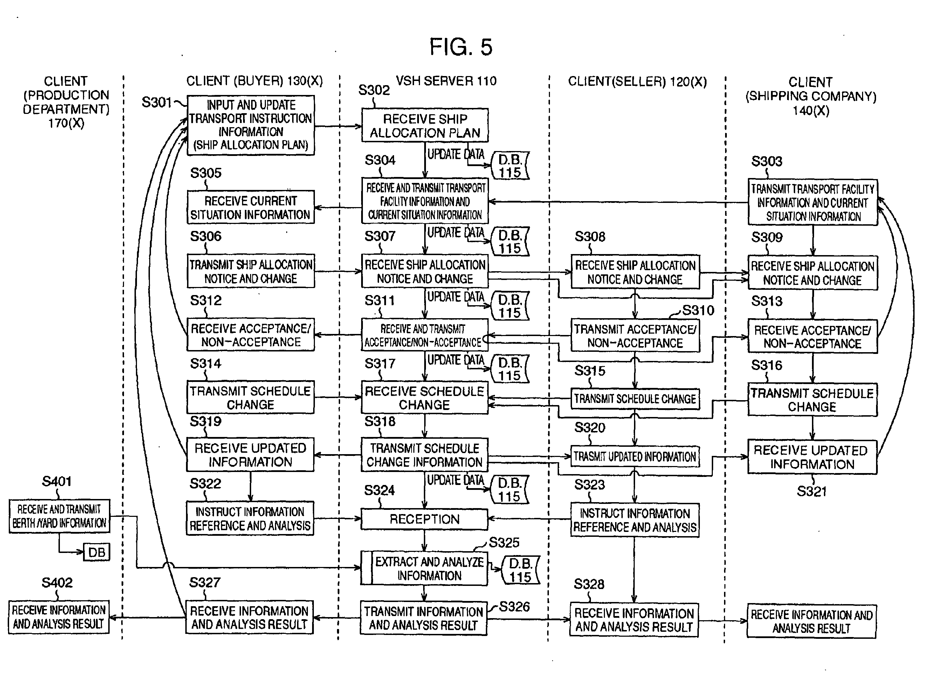

Fig. 4 shows an example of the operation characteristic of the transport management system 100. Fig. 5 shows an example of the entire transport management system 100 including the aforementioned operation shown in Fig. 4.

The operation (function) shown in Fig. 4 and Fig. 5 is performed by the operational AP server 116 and the CPU 601 of the computer function 600 (See Fig. 3) executing an application to which the present invention is applied (a control program in accordance with the flowcharts shown in Fig. 4 and Fig. 5).

Incidentally, here, to simplify the explanation, the buyer 130(X) charters the ship (FOB contract), and attention is paid to the buyer 130(X), the seller 120(X), the shipping company 140(X), and the production department 170(X), but the inspection agency 150(X) may additionally be included. Namely, information held in the inspection agency 150(X) may also be stored and managed in the database 115 and presented via the communication network 160.

### (1) Operation characteristic of the transport management system 100: See Fig. 4

### Step S201:

The shipping company 140(X) inputs the transport facility information (information including the ship name, dimension, loading capacity, ship vacancy information, vacancy information on a partial loading space, and so on) to the transport management function 110 via the communication network 160.

The buyer 130(X) or the seller 120(X) which charters the ship inputs the raw material or fuel brand information (information on the area of production, grade, weight, and so on of the raw material or fuel) and the transport instruction information (information on the loading port, unloading port, loading method, and so on) to the transport management function 110 via the communication network 160 based on a ship allocation plan under a charter contract executed by the buyer 130(X) or the seller 120(X) itself.

The production department 170(X) of the buyer 130(X) inputs information on what kinds of berths and yards exist (berth/yard information) as information on a port on its side to the transport management function 110 via the communication network 160.

The transport management function 110 stores and manages the berth/yard information together with the transport facility information, the raw material or fuel brand information, and the transport instruction information (transport management information) inputted via the communication network 160 in the database 115. This management information becomes able to be referred to via the communication network 160.

### Step S202:

The transport management function 110 presents the transport management information in the database 115 to the seller 120(X) via the communication network 160.

Thereby, the seller 120(X) considers whether the transport by the ship chartered by the buyer 130(X) can be accepted and gives notice of information on the result thereof (acceptance information) to the transport management function 110.

The transport management function 110 gives notice of the acceptance/non-acceptance of the transport instruction issued from the seller 120(X) to the buyer 130(X).

As a result, the buyer 130(X) knows whether the transport based on the charter contract with the shipping company 140(X) is acceptable by the seller 120(X) or not.

Incidentally, "notice" here may be notice by electronic mail, or the buyer 130(X) itself may acquire information on the acceptance/non-acceptance of the transport instruction on the seller 120(X) side by directly accessing the transport management function 110.

Hence, by the buyer 130(X) accessing the transport management function 110 via the communication network 160, the optimum allocation calculation of the raw material or fuel for the production departments 170(1), 170(2), ..., 170(n) (steelmaking plants or the like when the buyer 130(X) is a steel corporation) which use the raw material or fuel is performed and information on the calling port, alongside berth, brand to be unloaded, unloading quantity, unloading order, and so on (unloading area allocation information) is determined, using the management information in the database 115.

Note that the optimum allocation calculation and the determination of the unloading area allocation information on the buyer 130(X) side will be described later in detail.

### Step S203:

The transport management function 110 stores and manages the unloading area allocation information determined in step S202 in the database 115. This management information becomes able to be referred to via the communication network 160.

Moreover, the buyer 130(X) provides the unloading area allocation information managed by the transport management function 110 to the production department 170(X).

### step S204:

If any change (a change in ship allocation plan) occurs when each of the seller 120(X), the buyer 130(X), the shipping company 140(X), and the production department 170(X) accesses the transport management function 110 via the communication network 160 to refer to the management information in the database 115, information on the change is inputted to the transport management function 110 via the communication network 160.

### Step S205:

The transport management function 110 updates the information in the database 115 based on the information on the change inputted via the communication network 160.

Consequently, it becomes possible that each of the seller 120(X), the buyer 130(X), the shipping company 140(X), and the production department 170(X) refers to the updated information in the database 115 by accessing the transport management function 110 via the communication network 160.

For example, when a change in schedule occurs on the buyer 130(X) side, the seller 120(X) knows the change in schedule on the buyer 130(X) side by referring to the information in the database 115 which is updated along with the change, and considers the acceptance/non-acceptance of a new transport instruction based on the change.

Moreover, the shipping company 140(X) refers to the information in the database 115 by accessing the transport management function 110 via the communication network 160, makes out a bill based on this information, and inputs information on the bill to the transport management function 110 via the communication network 160.

After storing the bill information provided from the shipping company 140(X) via the communication network 160 in the database 115, the transport management function 110 presents this bill information to the buyer 130(X).

Thereby, the buyer 130(X) confirms the bill for the ship chartered from the shipping company 140(X).

As described above, the transport management function 110 stores and manages the information specific to the raw material or fuel held by the buyer 130(X), the seller 120(X), and the shipping company 140(X) (the transport management information including the transport facility information, the raw material or fuel brand information, the transport instruction information, the bill information, and so on ), the berth/yard information on the port held by the production department 170(X) of the buyer 130(X), and the unloading area allocation information determined by the buyer 130(X), updates the information as necessary, and provides the information in the database 115 to the outside via the communication network 160.

### (2) Operation of the entire transport management system 100: See Fig. 5

### Step S301:

The buyer 130(X) which charters the ship transmits ship allocation plan information (transport instruction information) based on the charter contract with the shipping company 140(X) via the communication network 160.

Moreover, when there occurs any change in the ship allocation plan information previously transmitted to the transport management function 110, the buyer 130(X) transmits information on the change to the transport management function 110 via the communication network 110.

### Step S302:

When the ship allocation plan information is transmitted from the buyer 130(X), the transport management function 100 stores (registers) the ship allocation plan information in the database 115, and when the information on the change in the ship allocation plan is transmitted from the buyer 130(X), corresponding ship allocation plan information in the database 115 is updated based on the information on the change.

### Step S303:

The shipping company 140(X) transmits transport facility information and current situation information on the ship chartered by the buyer 130(X) to the transport management function 110 via the communication network 160.

### Step S304:

The transport management function 110 stores (registers) the transport facility information and the current situation information from the shipping company 140(X) in the database 115.

Then, the transport management function 110 transmits the current situation information stored in the database 115 to the buyer 130(X) via the communication network 160.

### Step S305, Step S306:

The buyer 130(X) refers to the current situation information from the transport management function 110 (step S305), reconsiders the ship allocation plan (transport instruction) in step S301, changes the ship allocation plan if necessary, and transmits finally determined ship allocation plan information (transport instruction information) to the transport management function 110 via the communication network 160 (step S306).

### Step S307:

The transport management function 110 updates corresponding ship allocation plan information in the database 115 by the ship allocation plan information from the buyer 130(X).

Then, the transport management function 110 transmits the updated ship allocation plan information in the database 115 to the seller 120(X) and the shipping company 140(X) respectively.

### Step S308, Step S309:

The seller 120(X) receives the ship allocation plan information from the transport management function 110 (step S308), and the shipping company 140(X) also receives the ship allocation plan information from the transport management function 110 (step S309).

### Step S310

The seller 120(X) considers whether or not to accept transport by the ship as a transport facility presented by the ship allocation plan information (transport instruction information) from the transport management function 110 and transmits information on whether or not to accept the transport instruction (acceptance information) to the transport management function 110 via the communication network 160.

### Step S311:

The transport management function 110 stores (registers) the acceptance information from the seller 120(X) in the database 115.

Then, the transport management function 110 transmits the acceptance information in the database 115 to the buyer 130(X) and the shipping company 140(X) respectively via the communication network 160.

### Step S312:

The buyer 130(X) knows whether or not the seller 120(X) accepts the transport instruction by the acceptance information from the transport management function 110, for example, and when the seller 120(X) does not accept the transport instruction, the buyer 130(X) signs a new charter contract with the shipping company 140(X) or adjusts a shipping schedule based on the already singed charter contract to amend the ship allocation plan as necessary.

### Step S313:

The shipping company 140(X) also knows whether or not the seller 120(X) accepts the transport instruction by the acceptance information from the transport management function 110. As a result, for example, when the seller 120(X) does not accept the transport instruction, the processing steps in and after step S303 are executed in the manner described above by signing the new charter contract or adjusting the shipping schedule based on the already signed charter contract on the buyer 130(X) side in step S312.

### Step S314 to step S316:

For example, when a schedule change occurs due to some cause on the buyer 130(X), seller 120(X), or shipping company 140(X) side even if once the seller 120(X) accepts the transport instruction, the side on which the change occurs transmits information on the change to the transport management function 110 via the communication network 160.

### Step S317, step S318:

The transport management function 110 updates corresponding information in the database 115 based on the information on the change (step S317), and transmits the updated information to the buyer 130(X), the seller 120(X), and the shipping company 140(X) respectively via the communication network 160 (step S318).

### Step S319:

The buyer 130(X) refers to the updated information from the transport management function 110, signs a charter contract with the shipping company 140(X) again or adjusts a shipping schedule based on the already singed charter contract as necessary, and executes the processing steps in and after step S301 in the manner described above.

### Step S320:

The seller 120(X) refers to the updated information from the transport management function 110 and knows that the schedule change occurs.

### Step S321:

The shipping company 140(X) executes the processing steps in and after step S303 in the manner described above when a new charter contract is signed with the buyer 130(X) or the shipping schedule based on the already signed charter contract is adjusted in step S319 by the information on the change from the transport management function 110.

### Step S322:

When wanting to refer to or analyze the information managed in the database 115 of the transport management function 110 (transport facility information, raw material or fuel brand information, transport instruction information, transport current situation information, berth/yard information, and so on), the buyer 130(X) transmits instruction information to that effect to the transport management function 110 via the communication network 160.

### Step S323:

When wanting to refer to or analyze the information managed in the database 115 of the management function 110 (transport facility information, raw material or fuel brand information, transport instruction information, transport current situation information, berth/yard information, and so on), the seller 120(X) also transmits instruction information to that effect (information reference/analysis instruction information) to the transport management function 110 via the communication network 160.

### Step S324 to step S325, step S401:

Based on the information reference/analysis instruction information from the buyer 130(X) or/and the seller 120(X) (step S324), the transport management function 110 extracts corresponding information from the database 115, and analyzes it as required (step S325).

Particularly, in this embodiment, when the instruction from the buyer 130(X) in step S322 is the instruction for the optimum allocation calculation and the determination of the unloading area allocation information, the following operation is executed.

First, as described above, the production department 170(X) previously inputs berth and yard information to the transport management function 110 via the communication network 160 (step S401).

The transport management function 110 saves the berth and yard information from the production department 170(X) in the database 115.

Then, the buyer 130(X) requests the transport management function 110 via the communication network 160 to perform the optimum allocation calculation and the determination of the unloading area allocation information to optimally allocate the purchased raw material or fuel to each of the production departments 170(1), 170(2), ..., 170(n) of the buyer 130(X) (step S322).

Then, when receiving the aforementioned request from the buyer 130(X)(step S324), the transport management function 110 determines the unloading area allocation information including the calling port, alongside berth, brand to be unloaded, and unloading order using the management information in the database 115 (step S325).

More specifically, for example, the transport management function 110 solves an optimum solution which minimizes the number of calling ports, yard demurrage, berth demurrage, and so on.

The "number of calling ports" means the number of calling ports when the ship stops at the plurality of production departments 170(1), 170(2), ..., 170(n) (steelmaking plants or the like) and discharges its cargo.

The "yard demurrage" means the cost required to make the ship wait until the yard becomes vacant since a yard which temporarily stores the raw material or fuel is full, and, for example, it means a charge for waiting time per hour.

"The berth demurrage" means the cost required to make the ship wait until the berth becomes vacant since the berth is full, and, for example, it means a charge for waiting time per hour.

As an example of a method for solving the optimum solution, first, macro optimization which minimizes the number of calling ports is performed while the berth capacity and the yard stock capacity in addition to preconditions such as the securement of safety stock, a ship type constraint, and a brand constraint are fulfilled, and then, macro optimization which determines the calling port, alongside berth, brand to be unloaded, and unloading order such that the total sum of the yard demurrage and the berth demurrage is minimized is performed.

As for the timing of optimization on this occasion, for example, the macro optimization is performed every ten days, and the macro optimization is performed every time the ship arrives at the buyer 130(X) side.

The "safety stock" means excessive raw material or fuel which is previously secured on the assumption that additional raw material or fuel will become necessary urgently.

The "ship type constraint" means a constraint on the ship able to come alongside the berth.

The "brand constraint" means a constraint on the brand of the raw material or fuel whose unloading amount is to be secured.

The "berth capacity" means a constraint on the number of ships able to come alongside the berth at a time.

The "yard stock capacity" means the allowable capacity of the yard which temporarily stores the raw material or fuel.

### Step S326:

The transport management function 110 transmits information extracted from the database 115 and an analysis result thereof when the information is analyzed to the side which has transmitted the information reference/analysis instruction information.

Particularly, when determining the unloading area allocation information including the calling port, alongside berth, brand to be unloaded, and unloading order by the aforementioned optimum allocation calculation, the transport management function 110 manages this unloading area allocation information in the database 115 and simultaneously transmits this information to the buyer 130(X) which requests the optimum allocation calculation and the determination of the unloading area allocation information via the communication network 160.

Accordingly, by accessing the transport management function 110 via the communication network 160, each of the seller 120(X), the buyer 130(X), and the shipping company 140(X) can refer to the unloading area allocation information in the database 115 and reflect this unloading area allocation information in future transport instruction information.

### Step S327, Step S328:

In step S324 to step S326, each of the buyer 130(X) and the seller 120(X) can acquire the information managed in the database 115 of the transport management function 110 and also acquire the analysis result thereof.

Namely, by accessing the transport management function 110, each of the buyer 130(X) and the seller 120(X) can retrieve and acquires only necessary information on the transport of the raw material or fuel when necessary.

Moreover, since all the information on the transport of the raw material or fuel (transport management information) is collectively managed in the database 115, the same information is provided to the buyer 130(X) and the seller 120(X), and the up-to-date information is always managed in the database 115, whereby the up-to-date information can always be provided to the buyer 130(X) and the seller 120(X).

Further, the buyer 130(X) receives the unloading area allocation information from the transport management function 110 and transmits this unloading area allocation information to the production department 170(X).

### Step S402:

The production department 170(X) receives the unloading area allocation information from the buyer 130(X) and performs a receiving operation of the raw material or fuel and the like based on this unloading area allocation information.

As described above, in this embodiment, the buyer 130(X) of the raw material or fuel, the seller 120(X), the shipping company 140(X), and the production department 170(X) of the buyer 130(X) can share the management information in the database 115 of the transport management function 110 (transport facility information, raw material or fuel brand information, transport instruction information, berth/yard information, unloading area allocation information, and so on) in its up-to-date state via the communication network 160, whereby necessary information can be obtained in real time, timely, and accurately, and hence an efficient transport plan can be drawn up. Particularly, unloading area ship allocation management jobs on the buyer 130(X) side can be performed quickly, exactly, and efficiently by the unloading area allocation information without any skilled expert.

Furthermore, when the unloading area allocation information (information on the calling port, alongside berth, brand to be unloaded, unloading quantity, unloading order, and so on) is determined, a solution which minimizes the number of calling ports and the transport cost while stable stock is secured under constraint conditions of at least a berth capacity and a yard stock capacity is solved, and consequently, the transport plan to minimize the transport cost which has not been able to be realized even by the skilled expert can be realized.

Incidentally, in this embodiment, the seller and the buyer which trade in the raw material or fuel, and the shipping company which transports the raw material or fuel are previously determined in some cases, but without being limited to this case, there may be plural candidates therefor, respectively. For example, when a buyer trades with plural sellers and receives a reply of acceptance from the plural sellers, the buyer may determine an appropriate seller by referring to brand information, transport facility information, and so on.

Moreover, as for the raw material or fuel, the present invention is applicable to raw material or fuel such as iron ore, coal, any other mineral resource, grain, or fertilizer (raw material or fuel), namely, which is not a solid product but a bulk load, goods in bulk, a "Bulk Cargo", or the like whose shape is not specified.

Further, in this embodiment, the ship is used as a transport facility, but without limiting to this example, the present invention is applicable to whatever can be loaded with the raw material or fuel such as a plane, a truck, or the like.

Furthermore, it is needless to say that the object of the present invention can be attained by supplying a storage medium on which a program code of software to realize functions of a host and a terminal of this embodiment is stored to a system or a device, and making a computer (or a CPU or MPU) of the system or the device read and execute the program code stored on the storage medium.

In this case, the program code itself read from the storage medium realizes the functions of this embodiment, and hence the storage medium which stores the program code constitutes the present invention.

As the storage medium to supply the program code, a ROM, a floppy disk, a hard disk, an optical disk, a magneto-optic disk, a CD-ROM, a CD-R, a magnetic tape, a nonvolatile memory card, or the like can be used.

It is also needless to say that in addition to the realization of the functions of the present invention by executing the program code read by the computer, a case where an OS working on the computer or the like performs part or all of actual processing based on instructions of the program code and the functions of this embodiment are realized by this processing is also included.

It is also needless to say that a case where after the program code read from the storage medium is written into a memory included in a function expansion board inserted into the computer or a function expansion unit connected to the computer, a CPU or the like included in the function expansion board or the function expansion unit performs part or all of actual processing and the functions of this embodiment are realized by this processing is also included.

### Industrial Availability

As explained above, in the present invention, information on transport management of a raw material or fuel (transport management information) and information on allocation of the transported raw material or fuel (allocation of the raw material or fuel to a production department of the buyer or the like) (unloading area allocation information) can be shared among the buyer of the raw material or fuel, a seller, a shipping company, and the production department of the buyer (a steelmaking plant or the like which uses the raw material or fuel when the buyer is a steelmaker) via a network, whereby necessary information can be obtained in real time, timely, and correctly, and hence an efficient transport plan can be drawn up. Particularly, unloading area ship allocation management jobs on the buyer side can be performed quickly, exactly, and efficiently by the unloading area allocation information (information on calling ports, alongside berths, brands to be unloaded, unloading quantity, unloading order, and so on) without any skilled expert.

Furthermore, in a case where the transport facility is a ship, for example, if a solution which minimizes the number of calling ports and the transport cost while stable stock is secured under constraint conditions of at least a berth capacity and a yard stock capacity is solved when the unloading area allocation information is determined, the transport plan to minimize the transport cost which has not been able to be realized even by the skilled expert can be realized.

## Claims

1. A transport management device which is allowed to communicate with an outside via a network, comprising:
a storage unit storing and managing information on transport management of a raw material or fuel provided from the outside via the network and information on allocation of the transported raw material or fuel in such a manner that these information are allowed to be referred to from the outside via the network.

2. The transport management device according to claim 1, further comprising a presenting unit presenting the information managed in said storage unit to the outside via the network.

3. The transport management device according to claim 2, wherein said presenting unit presents a result of updating corresponding information in said storage unit based on a change instruction from an information provider side via the network to the outside via the network.

4. The transport management device according to claim 2, wherein said presenting unit presents corresponding information in said storage unit based on an information request from the outside via the network to a requester of the information via the network.

5. The transport management device according to claim 1, wherein
the information on the transport management of the raw material or fuel in said storage unit includes at least any information of transport facility information provided from a management side of a transport facility, transport current situation information provided from the management side, raw material or fuel brand information provided from a buyer side or a seller side of the raw material or fuel, and transport instruction information provided from the buyer side or the seller side of the raw material or fuel, and
the information on the allocation of the raw material or fuel in said storage unit includes information on at least any of calling ports, alongside berths, brands to be unloaded, unloading quantity, and unloading order when the transport facility is a ship.

6. The transport management device according to claim 1, further comprising a determining unit determining the information on the allocation of the raw material or fuel based on at least the information on the transport management of the raw material or fuel.

7. The transport management device according to claim 6, wherein
the information on the allocation of the raw material or fuel includes information on at least any of calling ports, alongside berths, brands to be unloaded, unloading quantity, and unloading order when a transport facility is a ship, and
said determining unit determines the information on the allocation of the raw material or fuel based on information on berths and yards of a port of production departments provided from the production departments of the buyer of the raw material or fuel.

8. The transport management device according to claim 7, wherein said determining unit determines the information on the allocation of the raw material or fuel based on a solution which minimizes the number of calling ports and a transport cost under constraint conditions of at least a berth capacity and a yard stock capacity.

9. A transport management system in which a buyer side of a raw material or fuel, production departments of the buyer side, a seller side, a management side of a transport facility of the raw material or fuel, and a transport management side are connected so as to be allowed to communicate at least on a same network, wherein
the transport management side comprises a function which stores and manages information on transport management of the raw material or fuel provided from an outside via the network and information on allocation of the transported raw material or fuel in such a manner that these information are allowed to be referred to from the outside via the network.

10. A transport management system in which a buyer side of a raw material or fuel, production departments of the buyer side, a seller side, and a management side of a transport facility of the raw material or fuel are connected so as to be allowed to communicate at least on a same network, comprising:
a storage unit storing information on transport management of the raw material or fuel and information on allocation of the transported raw material or fuel in such a manner that these information are allowed to be referred to from an outside via the network.

11. A transport management method for performing transport management of a raw material or fuel via a network, comprising:
a first managing step of managing information on the transport management inputted from at least any of a buyer side of the raw material or fuel, a seller side, and a management side of a transport facility on the network;
a determining step of determining information on allocation of the raw material or fuel using the transport management information managed in said first managing step;
a second managing step of managing the information determined in said determining step; and
a providing step of providing the management information in said first and second managing steps to at least any of the buyer side, production departments of the buyer side, the seller side, and the management side of the transport facility in such a manner that the information is allowed to be referred to via the network.

12. The transport management method according to claim 11, further comprising:
an updating step of updating the management information in said first and second managing steps based on information on change inputted by at least any of the buyer side, the production departments of the buyer side, the seller side, and the management side of the transport facility, wherein
said providing step comprises a step of providing the management information updated in said updating step.

13. The transport management method according to claim 11, wherein the information on the allocation of the raw material or fuel includes information on at least any of calling ports, alongside berths, brands to be unloaded, unloading quantity, and unloading order when the transport facility is a ship, and
said determining step comprises a step of determining the information on the allocation of the raw material or fuel based on a solution which minimizes the number of calling ports and a transport cost under constraint conditions of at least a berth capacity and a yard stock capacity.

14. A computer-readable storage medium on which a program to make a computer function as a predetermined means is recorded, wherein
said predetermined means comprises a storage unit storing and managing information on transport management of a raw material or fuel provided from an outside via a network and information on allocation of the transported raw material or fuel in such a manner that these information are allowed to be referred to from the outside via the network.
